Europäisches Patentamt

European Patent Office

Office européen des brevets

(11) Numéro de publication: **0 085 630**
A1

# DEMANDE DE BREVET EUROPEEN

(21) Numéro de dépôt: 83400213.1

(22) Date de dépôt: 01.02.83

(51) Int. Cl.³: **E 04 B 2/74**
**E 04 B 2/78**

(30) Priorité: 01.02.82 FR 8201556

(43) Date de publication de la demande:
10.08.83 Bulletin 83/32

(84) Etats contractants désignés:
AT BE CH DE GB IT LI LU NL SE

(71) Demandeur: Pollet, Roger
30, Avenue du Golf
F-59650 Villeneuve d'Ascq(FR)

(72) Inventeur: Pollet, Roger
30, Avenue du Golf
F-59650 Villeneuve d'Ascq(FR)

(74) Mandataire: Nony, Michel
Cabinet Nony 29, rue Cambacérès
F-75008 Paris(FR)

(54) Cloison formée de panneaux montés sur armatures et panneau susceptible d'être utilisé pour la réalisation d'une telle cloison.

(57) Cloison formée de panneaux notamment en matériau friable.

Elle comprend des armatures (3) sensiblement verticales dans lesquelles sont formées des parties découpées de fixation (6), et des plaquettes (2) munies d'un côté de griffes enfoncées dans les panneaux (1) et de l'autre côté d'au moins une patte de fixation (12) en saillie coopérant avec les parties découpées des armatures verticales.

Fig. 4

EP 0 085 630 A1

# Cloison formée de panneaux montés sur armatures et panneau susceptible d'être utilisé pour la réalisation d'une telle cloison.

La présente invention concerne une cloison formée de panneaux notamment en matériau friable tel par exemple que du plâtre cartonné.

On connaît déjà de telles cloisons dans lesquelles les panneaux sont accrochés à des armatures à l'aide d'organes de fixation de divers types.

Etant donné la faible résistance à l'arrachement du matériau dans lequel sont réalisés les panneaux, les organes de fixation ont jusqu'à présent été montés depuis l'avant du panneau, par exemple au moyen de vis qui sont par conséquent apparentes après que le panneau ait été accroché à l'armature. Ceci est particulièrement le cas lorsque les panneaux sont amovibles puisqu'ils sont alors en général clippés sur l'armature et qu'une traction relativement importante doit pouvoir être exercée sur eux pour les décrocher.

On a donc été généralement amené à cacher les parties apparentes des organes de fixation à l'aide de couvre-joints mais ceci présente l'inconvénient de nécessiter une opération de pose supplémentaire et d'être donc onéreux et de plus d'être relativement peu esthétique.

La présente invention vise à pallier ces inconvénients en fournissant une cloison formée de panneaux notamment en matériau friable dont les organes de fixation présentent une bonne résistance à l'arrachement.

A cet effet la présente invention a pour objet une cloison formée de panneaux notamment en matériau friable tel que du plâtre cartonné caractérisée par le fait qu'elle comprend des armatures sensiblement verticales dans lesquelles sont formées des parties découpées de fixation et des plaquettes munies d'un côté de griffes enfoncées dans les panneaux et de l'autre côté d'au moins une patte de fixation en saillie coopérant avec les parties découpées des armatures verticales.

De façon surprenante on a constaté que les griffes dont sont munies les plaquettes de fixation présentent une bonne résistance à la traction une fois qu'elles sont enfoncées dans les panneaux malgré le caractère éventuellement friable de ceux-ci.

Bien entendu ces griffes ne dépassent pas du côté visible du panneau ce qui résoud le problème posé.

De plus, les pattes de fixation coopérant avec des parties découpées dans les armatures, les griffes des plaquettes de fixation ne sont pas soumises à des efforts d'arrachement mais à des efforts tranchants pour lesquels elles disposent d'une bien meilleure résistance. Les armatures ont, dans un mode de réalisation préféré de l'invention, sensiblement des sections

0085630

transversales en I, les ouvertures de fixation, étant formées dans les ailes des armatures.

Les ailes des armatures peuvent en outre comporter au voisinage des ouvertures de fixation, des saillies sur lesquelles sont appuyés les dos des panneaux.

On évite ainsi le contact métal sur métal des plaquettes de fixation sur les armatures, contact qui nécessiterait des tolérances faibles si l'on souhaite éviter un jeu.

Les parties de l'âme des armatures adjacentes aux ailes, peuvent se trouver dans des plans décalés du plan de la partie centrale de l'âme.

Il est ainsi possible de percer les ailes des armatures dans leur partie se trouvant en prolongement de l'âme c'est à dire leur partie centrale où s'effectue la jonction entre deux panneaux adjacents. Ceci permet en particulier de fixer des étagères sur les armatures ou encore de disposer un couvre-joint pour des raisons esthétiques.

Les armatures peuvent par exemple être réalisées en tôle pliée et être sensiblement symétriques par rapport à l'axe vertical de leur âme pour assurer leur équilibre statique.

Dans un mode de réalisation préféré, les pattes de fixation des plaquettes forment des crochets engagés dans les parties découpées des armatures.

Les pattes de fixation peuvent alors présenter au fond de la partie en creux du crochet une découpe leur permettant de pincer les armatures.

Cet agencement permet en particulier d'éviter tout jeu entre les armatures et les panneaux qu'elles supportent.

La présente invention a également pour objet un panneau susceptible d'être utilisé pour la réalisation d'une cloison telle que décrite ci-dessus caractérisé par le fait que la ou les pattes de fixation sont dans le plan de la plaquette ou dans un plan parallèle.

Cette disposition permet d'assurer l'expédition des panneaux de paroi préfabriqués sans qu'il soit nécessaire de disposer entre les panneaux des cales pour éviter un endommagement des pattes de fixation.

Les pattes ne sont alors dépliées perpendiculairement à la surface de la plaquette que sur le chantier lors du montage du panneau sur les armatures.

En décalant légèrement le plan des pattes de fixation du plan des plaquettes on peut assurer une prise convenable de ces pattes pour les déplier. De préférence on prévoit une zone de moindre résistance au niveau de la liaison de la patte de fixation sur la plaquette afin de faciliter son repliement.

On décrira maintenant à titre d'exemple non limitatif un mode de réalisation particulier de l'invention en référence aux dessins schématiques annexés dans lesquels :

- la figure 1 est une vue en perspective d'une partie de panneau d'une cloison selon l'invention dans la condition où il se trouve avant son installation,

- la figure 2 est une vue similaire à la figure 1 avec le panneau en condition de montage,

- la figure 3 illustre schématiquement une manière de passer de la condition de la figure 1 à la condition de la figure 2,

- la figure 4 est une vue en coupe horizontale partielle représentant une cloison selon l'invention,

- la figure 5 est une vue de face d'une plaquette de fixation utilisée dans la cloison selon l'invention,

- la figure 6 est une coupe selon la ligne VI-VI de la figure 5,

- la figure 7 est une vue de dessus de la plaquette de fixation de la figure 5 et,

- la figure 8 représente une variante de plaquette de fixation.

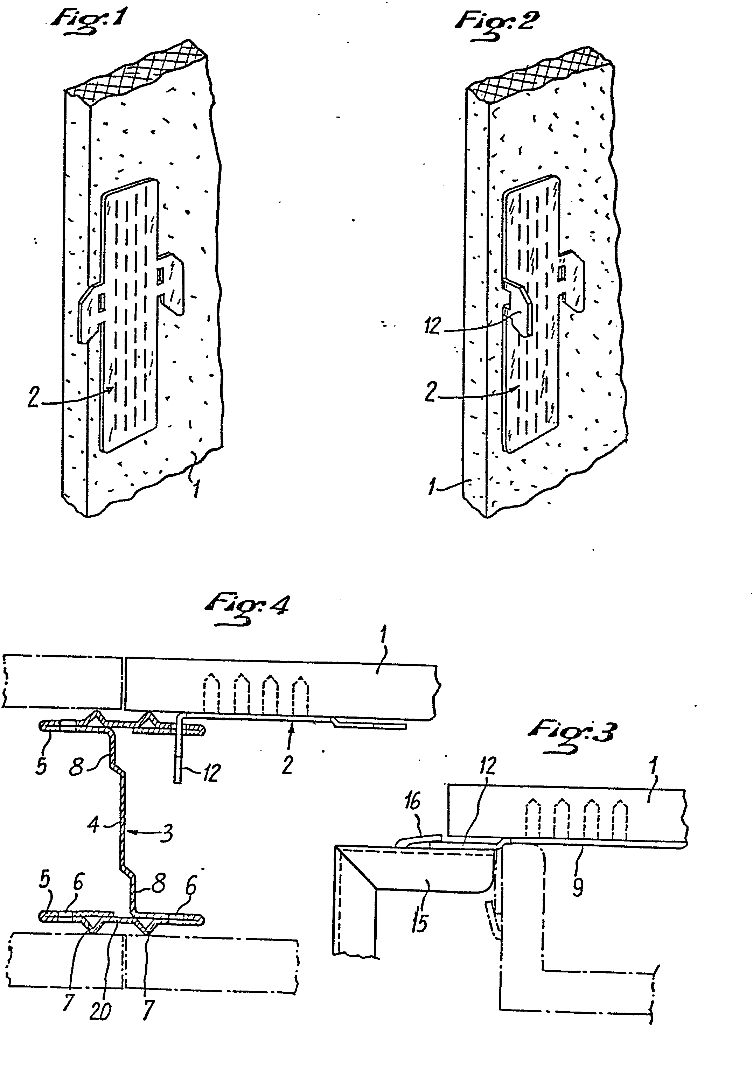

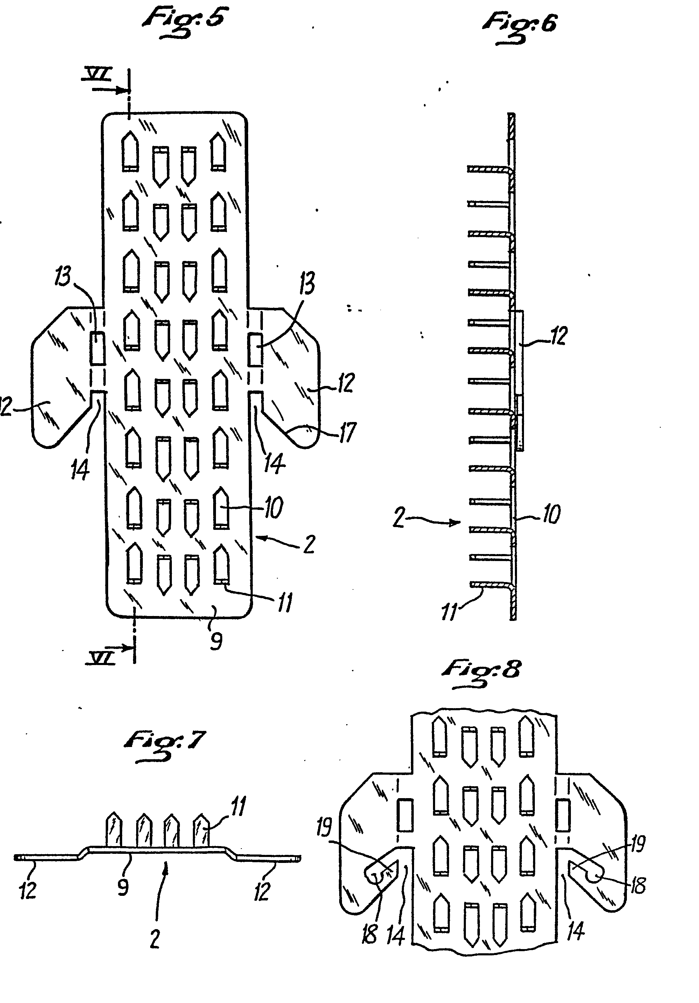

Le panneau de cloison 1 représenté aux figures 1 et 2 est réalisé par exemple en plâtre cartonné c'est à dire qu'il est formé d'une plaque de plâtre disposée entre deux feuilles de carton.

Sur ce panneau sont montées des plaquettes de fixation 2 que l'on décrira plus en détail ci-après et qui permettent son montage sur des armatures verticales 3.

L'armature 3 a ici sensiblement une section en forme de I avec une âme 4 et des ailes 5.

Les ailes 5 sont percées de trous de fixation 6 et comportent au voisinage de ces trous 6 des saillies 7 dont la fonction sera décrite ci-après.

Les parties 8 de l'âme 4 voisines des ailes 5 se trouvent dans des plans décalés de la partie centrale de l'âme 4.

Les armatures 3 sont réalisées en tôle pliée à partir de la partie centrale de l'âme 4. Les ailes 5 comportent par conséquent une double épaisseur de métal.

On constatera de plus sur la figure 4 que la partie supérieure de l'âme 4 est pliée tout d'abord à 90° vers la gauche avant de rvenir vers la droite alors que la partie inférieure de l'âme 4 est pliée tout d'abord à 90° vers la droite avant de revenir vers la gauche. L'armature 3 est par

0085630

conséquent symétrique par rapport à la partie centrale de son âme 4 et on a constaté que cette disposition la rendait moins sujette au vrillage.

On décrira maintenant la plaquette de fixation 2 en référence aux figures 5 à 7.

Cette plaquette comporte une partie centrale 9 dans laquelle sont formées des découpes 10 dont le métal rabattu forme des griffes 11 sensiblement perpendiculaires au plan de la plaquette. Dans le mode de réalisation représenté au dessin, les griffes 11 sont disposées en quinconce par colonnes avec les griffes de certaines colonnes repliées dans un sens et les griffes de l'autre colonne repliées dans l'autre sens.

Les plaquettes 2 sont fixées au panneau 1 par enfoncement des griffes 11 dans le matériau de ce panneau.

Les plaquettes 2 comportent par ailleurs des pattes de fixation latérales 12 qui comme cela est apparent sur les figures 6 et 7 sont dans un plan légèrement décalé du plan de la partie centrale 9. Les pattes 12 sont réalisées d'une seule pièce avec la partie centrale 9 de la plaquette mais des découpes 13 formées dans la zone de liaison entre les pattes 12 et la partie centrale 9 forment une zone de moindre résistance.

Les pattes de fixation 12 forment par ailleurs dans leur zone de liaison avec les parties centrales 9 de la plaquette 2 des découpes 14 en forme de crochet.

Les plaquettes de fixation 2 sont fixées sur le panneau 1 dans l'état où elles sont représentées dans les figures 5 à 7 c'est à dire avec les pattes de fixation sensiblement dans le prolongement de la partie centrale 9.

Préalablement au montage du panneau 1 sur les armatures 3 on rabat la patte de fixation 12 située la plus au bord du panneau 1 sensiblement perpendiculairement à ce panneau et du côté opposé aux griffes 11 comme cela est représenté à la figure 2.

On remarquera que ceci est facilité par la zone de moindre résistance formée entre la patte 12 et la partie centrale 9 ainsi que par le décalage du plan de la patte 12 par rapport au plan de la partie centrale. On a également prévu pour faciliter ce rabattement de fixer la plaquette 2 sur le panneau 1 de telle sorte que la patte 12 déborde légèrement avant d'être rabattue.

Le rabattement peut être effectué comme représenté à la figure 3 à l'aide d'un outil 15 comportant lui-même une patte 16 pouvant s'engager derrière la patte de fixation 12 et éventuellement une pointe pouvant s'engager dans la découpe 13. On fait alors pivoter l'outil 15 de la position représentée en trait plein à la position représentée en traits interrompus ce qui a pour effet de rabattre la patte de fixation 12 dans un plan sensiblement perpendiculaire à celui de la partie centrale 9 et du panneau 1.

Le panneau 1 peut alors être monté sur les armatures 3 en engageant les pattes de fixation 12 de ses plaquettes 2 dans les trous 6 des armatures. Le panneau se trouve accroché par l'engagement de la découpe 14 à la partie inférieure des trous 6. On remarque par ailleurs qu'une découpe inclinée 17 prolongeant la découpe 14 permet un engagement aisé des pattes de fixation 12 dans les trous de fixation 6.

Lorsque les pattes sont totalement engagées le panneau de cloison 1 vient en appui sur les saillies 7 ce qui évite un contact métal sur métal qui rendrait beaucoup plus difficile la suppression du jeu entre le panneau 1 et l'armature 3.

Le jeu peut encore être diminué avec la variante de plaque de fixation représentée à la figure 8.

Dans cette variante, la patte de fixation comporte une découpe 18 au fond de la découpe 14 et la découpe 14 est prévu avec une largeur légèrement inférieure à l'épaisseur de l'aile 5 de l'armature 3. Ainsi lors de l'accrochage du panneau le bec 19 formé entre la découpe 18 et la découpe 14 s'efface légèrement de sorte que la patte de fixation pince l'aile de l'armature.

La figure 4 représente en trait plein un panneau de cloison 1 monté sur l'armature 3 et en traits mixtes trois autres panneaux formant la cloison.

Grâce au décalage des parties 8 de l'âme 4 on pourrait percer la zone 20 des ailes 5 situées entre les deux saillies 7 ce qui permettrait de fixer par exemple des couvre-joints permettant de cacher le joint entre deux panneaux 1 adjacents ou encore d'installer des crémaillères ou des taquets permettant le montage d'étagères.

Par ailleurs un joint coupe feu pourrait également être placé dans l'espace compris entre la partie 20 de l'armature 3 et les panneaux de cloison 1.

Bien entendu diverses variantes et modifications pourraient apportées au mode de réalisation décrit ci-dessus sans sortir pour autant du cadre ni de l'esprit de l'invention.

C'est ainsi par exemple que les ouvertures de fixation décrites ci-dessus comme des trous 6 pourraient en fait être réalisées sous la forme de fentes débouchant latéralement pour permettre un montage latéral du panneau.

De même les plaquettes de fixation représentées comportent deux pattes de fixation mais elles pourraient bien entendu n'en comporter qu'une à

**0085630**

condition toutefois d'être de deux types différents suivant l'extrémité du panneau à laquelle elles sont fixées.

## REVENDICATIONS

1. Cloison formée de panneaux notamment en matériau friable tel que du plâtre cartonné, caractérisé par le fait qu'elle comprend des armatures (3) sensiblement verticales dans lesquelles sont formées des parties découpées de fixation (6), et des plaquettes (2) munies d'un côté de griffes (11) enfoncées dans les panneaux (1) et de l'autre côté d'au moins une patte de fixation (12) en saillie coopérant avec les parties découpées des armatures verticales.

2. Cloison selon la revendication 1, caractérisée par le fait que les armatures ont sensiblement des sections transversales en I.

3. Cloison selon la revendication 2, caractérisée par le fait que lesdites parties découpées de fixation sont formées dans les ailes (5) des armatures.

4. Cloison selon la revendication 3, caractérisée par le fait que les ailes des armatures comportent, au voisinage des ouvertures de fixation, des saillies (7) sur lesquelles sont appuyés les dos des panneaux.

5. Cloison selon l'une quelconque des revendications 2 à 4, caractérisée par le fait que les parties de l'âme (4) des armatures voisines des ailes sont dans des plans décalés du plan de la partie centrale de l'âme.

6. Cloison selon l'une quelconque des revendications 3 à 5, caractérisée par le fait que les armatures sont réalisée en tôle pliée et sont. sensiblement symétriques par rapport à l'axe vertical de leur âme.

7. Cloison selon l'une quelconque des revendications 1 à 6, caractérisée par le fait que les pattes de fixation des plaquettes forment des crochets (14) engagés dans les parties découpées des armatures.

8. Cloison selon la revendication 7, caractérisée par le fait que les pattes de fixation présentent au fond de la partie en creux du crochet, une découpe (18) leur permettant de pincer les armatures.

9. Cloison selon l'une quelconque des revendications 1 à 8, caractérisée par le fait que les griffes sont découpées dans la plaquette et pliées sensiblement perpendiculairement à la surface de celle-ci.

10. Panneau susceptible d'être utilisé pour la réalisation d'une cloison selon l'une quelconque des revendications 1 à 9, caractérisée par le fait que les pattes de fixation sont dans le plan de la plaquette ou dans un plan parallèle.

11. Panneau selon la revendication 10, caractérisée par le fait que la plaquette comporte une zone de moindre résistance au niveau de la liaison de la patte de fixation.

0085630

Fig:1

Fig:2

2

1

12

2

1

Fig:4

1

5
8

12

2

4
3

5  6      8  6

7  20  7

Fig:3

12      1

16

9

15

*Fig: 5*

*Fig: 6*

*Fig: 7*

*Fig: 8*

Office européen
des brevets

**RAPPORT DE RECHERCHE EUROPEENNE**

0085630
Numéro de la demande

EP   83 40 0213

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | US-A-3 906 695  (PELGRIM) <br><br>*Colonne 1, lignes 48-50; colonne 2, lignes 14-45; colonne 3, lignes 13-30; figures 1,5,6* | 1,2,3, 7,8 | E 04 B   2/74<br>E 04 B   2/78 |
| Y | FR-A-2 434 905  (AGAR)<br>*Page 1, lignes 1-2; page 3, ligne 7 à page 4, ligne 18; figures 2,3,4* | 1,9,11 | |
| A | FR-A-1 489 337  (JANSSEN)<br>*Page 1, colonne 1, 1er alinéa; page 2, colonne 2, 5e alinéa; page 3, colonne 1, 2e alinéa; figures 5,6,7,8* | 7 | |

DOMAINES TECHNIQUES
RECHERCHES (Int. Cl. ³)

E 04 B
E 04 F

Le présent rapport de recherche a été établi pour toutes les revendications

| Lieu de la recherche | Date d'achèvement de la recherche | Examinateur |
|---|---|---|
| LA HAYE | 27-04-1983 | CAVALERI S.P. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

OEB Form 1503. 03.82